# EUROPÄISCHE PATENTSCHRIFT

(11) **EP 3 798 767 B1**
(45) Veröffentlichungstag und Bekanntmachung des Hinweises auf die Patenterteilung: **02.03.2022**
(21) Anmeldenummer: 19199200.7
(22) Anmeldetag: 24.09.2019
(51) Int. Cl.: G05B 19/05, G05B 19/418

(54) **VERFAHREN UND ANORDNUNG ZUR KONTROLLE DES DATENAUSTAUSCHS EINES INDUSTRIELLEN EDGE-GERÄTES**
METHOD AND ARRANGEMENT FOR CONTROLLING THE DATA EXCHANGE OF AN INDUSTRIAL EDGE DEVICE
PROCÉDÉ ET DISPOSITIF DE COMMANDE DE L'ÉCHANGE DE DONNÉES D'UN TERMINAL INDUSTRIEL

(43) Veröffentlichungstag der Anmeldung: 31.03.2021
(73) Patentinhaber: Siemens Aktiengesellschaft, 80333 München (DE)
(72) Erfinder: Birk, Gunther, 91054 Erlangen/Buckenhof (DE); Kob, Peter, 90562 Heroldsberg (DE); Höfele, Markus, 68259 Mannheim (DE); Schrey, Rolf, 41189 Mönchengladbach (DE); Zeltner, Armin, 91085 Weisendorf (DE)

(56) Entgegenhaltungen:
- DE-A1-102012 205 907
- DE-U1-202019 104 954
- US-A1- 2019 176 332

## Beschreibung

Die Erfindung betrifft ein Verfahren zur Kontrolle des Datenaustauschs eines industriellen Edge-Gerätes mit einer industriellen Automatisierungsanordnung und mit einer Datenwolke gemäß dem Oberbegriff des Patentanspruchs 1, und ein industrielles Edge-Gerät mit einer Einrichtung zur Kontrolle des Datenaustauschs des Edge-Gerätes mit einer industriellen Automatisierungsanordnung und mit einer Datenwolke gemäß dem Oberbegriff des Patentanspruchs 11.

Industrielle Automatisierungsanordnungen, beispielsweise Produktionsanlagen für diskrete Güter oder prozesstechnische Anlagen, bestehen in der Regel aus einer Vielzahl computergesteuerter Komponenten wie Speicherprogrammierbarer Steuerungen (PLC - programmable logic controller) und anderer Geräte, wie z.B. HMI-Geräte (HMI - Human Machine Interface) und dergleichen. Aus vielerlei Gründen sind diese untereinander vernetzten Komponenten klassischer Weise von öffentlichen Netzwerken, insbesondere dem Internet, getrennt, beispielsweise um datentechnische Angriffe auf die Produktionseinrichtungen zu vermeiden.

Vermehrt wird jedoch verlangt, dass die ehedem in einem datentechnischen "Inselbetrieb" betriebenen aktiven Komponenten der industriellen Automatisierungsanordnungen Daten mit einem öffentlichen Netzwerk, insbesondere einer Datenwolke (im Folgenden auch "Cloud" genannt) austauschen können. Die Gründe sind vielfältig, beispielsweise sollen damit verschiedene lokale Automatisierungsanordnungen miteinander vernetzt werden können, eine Kontrolle des Produktionsbetriebs soll von verschiedenen Standorten weltweit aus erfolgen können, Aufträge sollen in die Automatisierungsanordnungen übermittelt werden können und Produktionsdaten ausgelesen werden können, etc.

Um den Datenaustausch zwischen den privaten Netzwerken der Automatisierungsanordnungen und dem öffentlichen Netzwerk, insbesondere der Cloud, zu regulieren und zu kontrollieren, werden an der Grenze zwischen dem privaten und dem öffentlichen Netzwerk sogenannte Edge-Geräte oder Edge-Devices eingesetzt. Die Aufgaben dieser Edge-Geräte können weit über die Kontrolle des Datenverkehrs hinausgehen, insbesondere können auf datentechnisch sehr leistungsfähigen Edge-Geräten Anwendungen und Prozesse ablaufen, die auf den speicherprogrammierbaren Steuerungen nicht ablaufen können. Das sind beispielsweise komplexe Berechnungen, Auswertungen von Produktionsdaten, Archivierungsaufgaben und dergleichen. Insbesondere ist es bei modernen Edge-Geräten möglich, auf diesen gekapselte, containerisierte Anwendungen, sogenannte "Apps", ablaufen zu lassen. Diese Apps können aus einem öffentlichen Anwendungsspeicher, einem sogenannten App-Store, bezogen werden. So kann beispielsweise eine App dafür eingesetzt werden, Produktionsabläufe zu überwachen und statistische Informationen über Performance, Auslastung, Fehler und dergleichen zu bilden und die an einen Cloud-Server weiterzuleiten, wobei diese Daten dort gespeichert werden und von einer überwachenden Instanz, beispielsweise einem MES-System, dort weiter ausgewertet oder abgerufen werden können.

Um ihren Aufgaben nachkommen zu können, müssen daher die meisten Apps oder Anwendungen der Edge-Geräte sowohl Daten mit dem privaten Automatisierungsnetzwerk als auch andere Daten mit der Cloud bzw. den dort angeordneten Servern und Kommunikationspartnern austauschen. Klassischer Weise besitzen daher die Edge-Geräte auch mindestens zwei getrennte Kommunikationskanäle, beispielsweise Netzwerkkarten, virtuell separierte Netze oder "Ports", wovon einer der Kommunikationskanäle mit dem privaten Automatisierungsnetzwerk verbunden ist, und ein weiterer der Kommunikationskanäle mit der Cloud verbunden ist, also beispielsweise an einem Internetanschluss angebunden ist.

Es ist eine klare Anforderung vieler Betreiber der industriellen Automatisierungsanordnungen, dass das Automatisierungsnetzwerk, also das private Netzwerk mit beispielsweise speicherprogrammierbaren Steuerungen und anderen sensiblen Geräten, und die Cloud bzw. das Internet oder allgemein: das öffentliche Netzwerk, klar voneinander getrennt sind, um Cyberangriffe, also unautorisierten Zugriff, zu vermeiden. Es wird also der unautorisierte Zugriff auf Produktionsdaten oder allgemein Geschäftsgeheimnisse befürchtet, zudem wird befürchtet, dass durch unautorisierte Zugriffe bzw. Angriffe die industrielle Produktion gestört wird, was im Extremfall sogar Gefahr für Produktionsmittel und Menschen bedeuten kann.

Zur Lösung dieses Problems ist es üblich, die Edge-Geräte, die meist eine handelsübliche PC- oder Serverarchitektur aufweisen, mit den gängigen Mitteln zu schützen, insbesondere durch das installieren einer sogenannten Firewall und dem damit verbundenen limitierten Zugang zu Netzwerkadressen und insbesondere zu sogenannten TCP/IP-Ports, so dass die Kommunikation auf bestimmte Dienste eingeschränkt wird, beispielsweise einen HTTPS-Dienst oder dergleichen.

Problematisch dabei ist jedoch, dass manche Anwendungen einen freien, ungehinderten Zugang zum Automatisierungsnetzwerk benötigen, um einer Vielzahl von Aufgaben nachgehen zu können und somit eine Vielzahl von Daten und Informationen im privaten Automatisierungsnetzwerk, also der Automatisierungsanordnung, zugreifen zu können.

In diesen Fällen ist das Vorsehen einer Firewall an dieser Stelle schwierig oder unmöglich, so dass es notwendig ist, diesen Anwendungen unkontrollierten Zugang zum Automatisierungsnetzwerk zu gewähren. Selbstverständlich darf solchen Anwendungen dann nicht gleichzeitig ungehinderter Zugang zum öffentlichen Netzwerk, also der Cloud, gewährt werden, weil ansonsten über die entsprechende Anwendung eine Angriffsmöglichkeit auf das Automatisierungsnetzwerk möglich wäre. Umgekehrt kann natürlich auch ein ungehinderter Zugang zum Cloud-Umfeld für eine Anwendung eingestellt werden, falls dies aus irgendwelchen Gründen notwendig ist. In diesem Fall muss der Anwendung jedoch der Zugang zum Automatisierungsnetzwerk gesperrt werden, um die ungewünschte direkte Verbindung zwischen öffentlichem und privatem Netzwerk, also der Cloud und dem Automatisierungsnetzwerk, zu verhindern.

In Summe führen diese Maßnahmen jedoch dazu, dass die Datensicherheit bei Anwendungen, die sowohl mit der Cloud als auch mit dem Automatisierungsnetzwerk kommunizieren, schwierig zu bewerkstelligen ist.

Es ist also eine Aufgabe der Erfindung, die Datensicherheit bei Anwendungen der industriellen Edge-Geräte, die sowohl Zugriff auf die Automatisierungsanordnung als auch Zugang zu der Datenwolke (Cloud) benötigen, zu verbessern.

Es ist eine Kernidee der erfindungsgemäßen Lösung dieser Aufgabe, dass das Edge-Gerät immer mindestens zwei getrennte physikalische Netzwerkanschlüsse oder allgemein Kommunikationsanschlüsse aufweist, einen davon zur Anbindung an die Datenwolke oder Cloud, und mindestens einen weiteren zur Anbindung an die industrielle Automatisierungsanordnung bzw. das lokale Netzwerk. Im Datenmanagement des Edge-Gerätes oder Edge-Devices kann dann eingestellt werden, ob eine Software-Komponenten oder allgemein eine Anwendung direkten Datenaustausch entweder mit der "Cloud" oder mit einer Komponente ("Device") der industriellen Automatisierungsanordnung bzw. allgemein dem Automatisierungsnetzwerk haben kann, aber nicht gleichzeitig. Im Datenmanagement kann für eine jeweils nicht direkte Datenverbindung zu der anderen Netzwerkebene ein spezifischer, restriktiver Datenzugriff freigegeben werden, der durch eine Kontrolleinrichtung kontrolliert wird. Das Datenmanagement wird dabei durch eine Datenflusskontrolleinrichtung ausgeübt, die den Datenverkehr der Kommunikationsanschlüsse verwaltet. Jede dieser Komponenten, Anwendungen, die Kontrolleinrichtung und die Datenflusskontrolleinrichtung kann jedoch trotzdem mit einer Vermittlungsschicht kommunizieren, die zumindest eine Firewall-Funktionalität für jeweils denjenigen physikalischen Netzwerkanschluss bzw. Kommunikationsanschluss realisiert, der nicht direkt auf die kommunizierenden Komponenten geroutet ist.

Dabei wird ein Verfahren zur Kontrolle des Datenaustauschs eines industriellen Edge-Gerätes mit einer industriellen Automatisierungsanordnung und mit einer Datenwolke vorgeschlagen, wobei das Edge-Gerät einen ersten Kommunikationsanschluss zu der industriellen Automatisierungsanordnung und einen zweiten Kommunikationsanschluss zu einem Netzwerk der Datenwolke aufweist, wobei das Edge-Gerät mit einer Anzahl die Daten austauschenden Anwendungen versehen ist, und wobei das Edge-Gerät mit zumindest einer Kontrolleinrichtung zur Kontrolle der auszutauschenden Daten nach Art einer Firewall oder nach Art eines Content-Filters, also mit inhaltsbasierter Filterung, ausgerüstet ist. Dabei wird für jede der Anwendungen eingestellt, ob der Datenaustausch der jeweiligen Anwendung entweder über den ersten Kommunikationsanschluss mittels der Kontrolleinrichtung kontrolliert wird und der Datenaustausch über den zweiten Kommunikationsanschluss direkt erfolgt, oder umgekehrt der Datenaustausch über den ersten Kommunikationsanschluss direkt erfolgt und die Kommunikation über den zweiten Kommunikationsanschluss mittels der Kontrolleinrichtung erfolgt, und wobei mittels einer Datenflusskontrolleinrichtung des Edge-Gerätes sichergestellt wird, dass eine Anwendung nicht gleichzeitig über beide Kommunikationsanschlüsse direkt Daten austauscht. Durch dieses Verfahren brauchen die Anwendungen bzw. Container (z.B. Docker-Container) mit den Anwendungen nicht intensiv bezüglich der Datensicherheit geprüft zu werden, da die Absicherung gegen Angriffe in der zentral und separat verwalteten Kontrolleinrichtung mit der Firewall-Funktionalität bzw. dem Content-Filter realisiert wird. Insbesondere ist dadurch sichergestellt, dass eine potenziell angreifbare Software-Komponente oder Anwendung nicht gleichzeitig unkontrollierten Datenaustausch mit der Automatisierungsanordnung und der Datenwolke (Cloud) haben kann.

Die Aufgabe wird außerdem durch ein industrielles Edge-Gerät mit einer Einrichtung zur Kontrolle des Datenaustauschs des Edge-Gerätes mit einer industriellen Automatisierungsanordnung und mit einer Datenwolke gelöst, wobei das Edge-Gerät einen ersten Kommunikationsanschluss zu der industriellen Automatisierungsanordnung und einen zweiten Kommunikationsanschluss zu einem Netzwerk der Datenwolke aufweist, wobei das Edge-Gerät mit einer Anzahl die Daten konsumierenden und/oder bereitstellenden und somit die Daten austauschenden Anwendungen versehen ist, und wobei das Edge-Gerät mit zumindest einer Kontrolleinrichtung zur Kontrolle der auszutauschenden Daten nach Art einer Firewall oder nach Art eines Content-Filters ausgerüstet ist. Dabei ist das Edge-Gerät mit einer Datenflusskontrolleinrichtung ausgerüstet, wobei die Datenflusskontrolleinrichtung derart ausgestaltet ist, dass eine Anwendung mit einem der Kommunikationsanschlüsse einen direkten Datenaustausch durchführt und mit dem jeweils anderen der Kommunikationsanschlüsse den Datenaustausch über die Kontrolleinrichtung durchführt, und wobei die Datenflusskontrolleinrichtung derart ausgestaltet ist, dass eine Anwendung nicht über beide Kommunikationsanschlüsse zur gleichen Zeit direkt Daten austauscht. Durch dieses industrielle Edge-Gerät werden die Vorteile realisiert, die bereits anhand des Verfahrens diskutiert wurden.

Vorteilhafte Ausgestaltungen der Erfindung sind in den abhängigen Patentansprüchen angegeben. Die dabei beschriebenen Merkmale und Vorteile, insbesondere die dort definierten Verfahrensschritte, gelten sinngemäß auch für das erfindungsgemäße Edge-Gerät, welches zur Ausführung der entsprechenden Verfahrensschritte eingerichtet sein soll, indem die Software-Komponenten des Edge-Gerätes, insbesondere die Datenflusskontrolleinrichtung, mit entsprechenden Software-Routinen programmiert ist. Die in den Ausgestaltungen angegebenen Verfahrensschritte bzw. Vorrichtungsmerkmale können sowohl einzeln, als auch in sinnfälliger Kombination miteinander realisiert sein.

Falls auf dem Edge-Gerät mehrere Anwendungen installiert bzw. mehrere Ablaufumgebungen (Container; Docker-Container, virtuelle Maschinen) installiert sind, kann vorteilhaft durch einen Benutzer über eine Benutzerschnittstelle des Edge-Gerätes bzw. der Datenflusskontrolleinrichtung administriert oder festgelegt werden, über welchen der Kommunikationsanschlüsse eine Anwendung oder eine Ausführungsumgebung, ein Container oder eine virtuelle Maschine oder dergleichen mit der Anwendung direkt kommuniziert, und über welchen der Kommunikationsanschlüsse dieselbe Anwendung oder dergleichen die Daten nur kontrolliert über die Kontrolleinrichtung austauschen kann. In einer Ausgestaltung kann sogar administriert werden, dass eine Anwendung oder ein Container oder dergleichen während des laufenden Betriebs die Möglichkeit erhält, diese Zuordnung autark zu ändern, was beispielsweise bei einem Anwendungsfall von Vorteil ist, bei dem eine Anwendung aus mehreren separaten Modulen besteht, die unterschiedliche Zugriffserfordernisse haben.

Alternativ oder auch zusätzlich kann auch durch die Datenflusskontrolleinrichtung selbst entschieden werden, welcher der Kommunikationsanschlüsse direkt mit einer Anwendung oder dergleichen verknüpft wird, und welcher andere der Kommunikationsanschlüsse über die Kontrolleinrichtung mit der Anwendung verknüpft wird. Dies geschieht vorteilhaft anhand eines Regelwerks, wobei beispielsweise festgelegt sein kann, dass eine Anwendung oder dergleichen nur dann einen ungefilterten Zugang zu dem Automatisierungsnetzwerk bzw. der Automatisierungsanordnung haben kann, wenn diese gewissen Sicherheitsanforderungen genügt. Dies kann beispielsweise anhand eines Zertifikates festgestellt werden, welches der jeweiligen Anwendung zugeordnet ist. Fehlt dieses Zertifikat oder ist es fehlerhaft oder abgelaufen, kann bestimmt sein, dass die Anwendung ausschließlich über die Kontrolleinrichtung Daten austauschen kann oder überhaupt nur über einen der Kommunikationsanschlüsse kommunizieren darf. Auch andere Folgen können festgelegt sein, beispielsweise, dass beide Kommunikationsanschlüsse über die Kontrolleinrichtung oder über zwei getrennte Kontrolleinrichtungen geroutet werden müssen. Das Regelwerk kann auch anhand des Typs der Anwendung oder des Herstellers der Anwendung die Entscheidung treffen. So kann beispielsweise festgelegt sein, dass eine Anwendung oder Applikation oder "App", die nachgewiesener Maßen von demselben Hersteller stammt, der auch die Komponenten der Automatisierungsanordnung bereitgestellt hat, immer direkten Zugriff auf das Automatisierungsnetzwerk haben dürfen, oder dergleichen.

Vorteilhaft wird die Kontrolleinrichtung als eine Anwendung auf dem Edge-Gerät installiert. Dies hat den Vorteil, dass ein regelmäßiges Update der Kontrolleinrichtung bzw. der damit definierten Sicherheitsbestimmungen sehr einfach möglich ist. Gleichzeitig wird dadurch ermöglicht, mehrere verschiedene Kontrolleinrichtungen auf ein- und demselben Edge-Gerät zu installieren, wodurch verschiedene Sicherheitsstufen für verschiedene Anwendungen realisiert werden können. Dabei weist die Kontrolleinrichtung vorteilhaft nicht nur eine sogenannte Firewall-Funktionalität auf, sondern kann die zu kontrollierenden Datenströme hinsichtlich ihres Inhalts ("Content") überprüfen. Dazu ist es vorteilhaft möglich, vom Hersteller der Automatisierungsanordnung bzw. der darin verbauten Komponenten (speicherprogrammierbare Steuerungen, HMI-Geräte, etc.) oder von einer dritten Seite Beschreibungsdateien zu erhalten und zu installieren, die Anweisungen zur Untersuchung der Datenströme enthalten. Solche Informationen können beispielsweise in Form von XML-Dateien geliefert werden, wobei die XML-Dateien Schlüsselworte oder Marker angeben, die in einem zu untersuchenden Datenstrom wiedergefunden werden können, und die die sensiblen Daten markieren, die ggf. gefiltert oder blockiert werden müssen. Insbesondere ist es in einer vorteilhaften Ausgestaltung auch möglich, Parameter-Abfragen, die beispielsweise mittels des OPC-UA-Protokolls übermittelt werden, zu kontrollieren und ggf. zu blockieren, insbesondere hinsichtlich ungewünschter Schreibzugriffe von der Anwendung in Richtung der Automatisierungsanordnung.

Vorteilhaft werden die Anwendung oder die Anwendungen mit jeweils einem Anwendungs-Container in jeweils einer virtuellen Ausführungsumgebung auf dem Edge-Gerät installiert, wobei in jedem Container vorteilhaft jeweils genau eine Anwendung installiert wird und jeder Container in einer separaten virtuellen Ausführungsumgebung zum Ablauf gebracht wird. Damit ist es möglich, die Zuordnung des direkten oder des kontrollierten Datenzugriffs jeweils für den entsprechenden Container festzulegen, wobei beispielsweise ein Container einem Dienstleister oder einer anderen Person zugeordnet werden kann und diese Person in diesem Container wechselweise verschiedene Anwendungen betreiben kann, ohne die Zuordnung der Datenzugriffe immer wieder neu administrieren lassen zu müssen. So kann beispielsweise ein Dienstleister, der Rohstoffe für eine Automatisierungsanordnung liefern soll, selbstständig eine App oder eine Anwendung betreiben, die ihm Auskunft über den Füllstand entsprechender Vorratslager gibt. In diesem Fall hätte der Container, der diesem Dienstleister zugeordnet ist, beschränkten Zugriff lesender Art auf die Automatisierungsanordnung, um die entsprechende Füllstände auslesen zu können.

Vorteilhaft wird der Datenaustausch dadurch kontrolliert, dass je Container einer der Kommunikationsanschlüsse direkt zu diesem Container geroutet wird, und der jeweils andere Kommunikationsanschluss über die Kontrolleinrichtung zu diesem Container geroutet wird. Das kann z.B. entweder über die generellen Firewall Regeln oder den beschriebenen Zugangsfilter gesteuert, oder der Netzwerkanschluss wird bei Berechtigung über die Kontrolleinrichtung direkt zugeordnet. Durch das einfache routen bzw. re-routen von Kommunikationsanschlüssen, also der Zuordnung der Kommunikationsanschlüsse zu Ausführungsumgebungen oder Ablaufumgebungen wie in diesem Beispiel die Container, wird das System einfach und schnell administrierbar. Darüber hinaus ist durch das Routen der Kommunikationsanschlüsse der Vorteil gegeben, dass der Datenaustausch insbesondere auf dem direkten Kanal ungehindert und damit sehr schnell von Statten gehen kann.

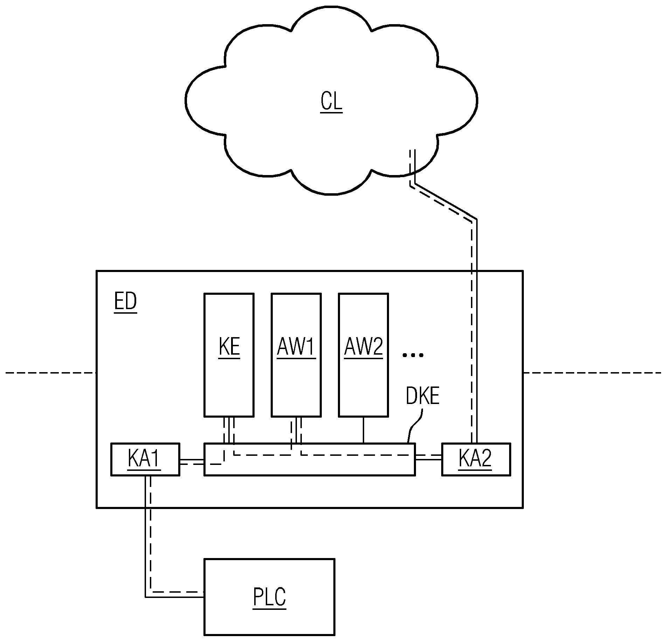

Ein Ausführungsbeispiel des erfindungsgemäßen Verfahrens wird nachfolgend anhand der Zeichnung erläutert. Es dient gleichzeitig der Erläuterung eines Ausführungsbeispiels für das erfindungsgemäße Edge-Gerät.

Dabei zeigt die einzige Figur in schematischer Darstellung ein Edge-Gerät mit Anwendungen und den Komponenten zum Datenaustausch mit einerseits der Datenwolke (Cloud) und andererseits der Automatisierungsanordnung (hier: PLC - speicherprogrammierbare Steuerung).

Die Figur zeigt im oberen Teil, also oberhalb einer gestrichelten Trennlinie, einen öffentlichen Bereich mit einer Datenwolke CL (Cloud). Unterhalb der gestrichelten Trennungslinie ist eine private Domäne gezeigt, hierbei eine industrielle Automatisierungsanordnung, in der exemplarisch als Bestandteil eine speicherprogrammierbare Steuerung PLC (programmable logic controller) dargestellt ist. An der Grenze zwischen den beiden Bereichen ist das Edge-Gerät ED (Edge-Device), mit den Kommunikationsanschlüssen KA1, KA2 gezeigt. Der Kommunikationsanschluss KA1 ist dabei ein proprietärer Port für ein Automatisierungsnetzwerk (z.B. Profinet), an dem die exemplarisch dargestellte speicherprogrammierbare Steuerung PLC angeschlossen ist. Der Kommunikationsanschluss KA2 ist mit einem öffentlichen Netzwerk, nämlich dem Internet, verbunden und kommuniziert mit einem (nicht dargestellten) Cloud-Server in der Datenwolke CL. Während in diesem vereinfachten Beispiel nur zwei Kommunikationsanschlüsse KA1, KA2 gezeigt sind, sind in realen Edge-Geräten ED auch mehrere Kommunikationsanschlüsse jeglichen Typs betreibbar, die nach dem hier vorgestellten Verfahren betrieben werden können.

Eine Firmware des Edge-Gerätes ED umfasst eine Datenflusskontrolleinrichtung DKE, die den Betrieb der Kommunikationsanschlüsse KA1, KA2 kontrolliert und die über diese Kommunikationsanschlüsse KA1, KA2 geführten Datenströme kanalisiert, insbesondere verschiedenen Ausführungsumgebungen zuleitet. Dabei sind die Datenströme jeweils bidirektionale Datenströme. Das Edge-Gerät ED umfasst eine Vielzahl virtueller Ausführungsumgebungen, in denen sogenannte Docker-Container instanziiert werden, wobei in jedem dieser Container eine Anwendung AW1, AW2 betrieben werden kann. In einem weiteren Container wird die Kontrolleinrichtung KE betrieben, die dazu ausgestaltet ist, einen oder mehrere Datenströme hinsichtlich ihrer Adressierung (Firewall-Funktionalität) und/oder hinsichtlich ihres Inhalts (Content-Filter) zu kontrollieren und gegebenenfalls zu filtern.

Das Edge-Gerät ED und in diesem Ausführungsbeispiel speziell die Firmware mit der Datenflusskontrolleinrichtung DKE stellt eine Benutzeroberfläche, speziell ein sogenanntes Web-Interface, bereit, mit der der Datenfluss der Anwendung AW1, AW2, der Kontrolleinrichtung KE und insbesondere der Kommunikationsanschlüsse KA1, KA2 eingerichtet werden kann.

Im Folgenden sei angenommen, dass die Anwendung AW1 Produktionsdaten aus der Automatisierungsanordnung, speziell von der speicherprogrammierbaren Steuerung PLC, abrufen und einer Anzahl (nicht dargestellter) SCADA-Systemen (SCADA-Supervisory Control and Data Acquisition System) in der Datenwolke CL, also der Cloud, bereitstellen soll. Entsprechend wird über die Benutzeroberfläche der Datenflusskontrolleinrichtung DKE administriert, dass die Datenverbindung von der speicherprogrammierbaren Steuerung PLC über den Kommunikationsanschluss KA1 über die Kontrolleinrichtung KE geführt werden soll und schließlich bei der Anwendung AW1 enden soll. Ein zweiter Datenstrom wird zwischen der Anwendung AW1 und der Datenwolke CL über den Kommunikationsanschluss KA2 geführt. Die Datenströme sind in der Figur durch gestrichelte Linien anhand der Verbindungslinien der entsprechenden Einheiten skizziert.

Über das User-Interface der Datenflusskontrolleinrichtung DKE ist die Kontrolleinrichtung KE derart administriert worden, dass der Datenstrom zwischen der speicherprogrammierbaren Steuerung PLC über den Kommunikationsanschluss KA1 hin zu der Anwendung AW1 nach Art einer sogenannten Datendiode gefiltert wird. Dies bedeutet, dass in Richtung von der Anwendung AW1 zu der speicherprogrammierbaren Steuerung PLC ausschließlich Abfragekommandos, speziell nach dem OPC-UA-Protokoll, übermittelt werden dürfen, die auf das Abfragen von Variablen in der speicherprogrammierbaren Steuerung PLC gerichtet sind. Alle anderen Befehle oder Meldungen von der Anwendung AW1 in Richtung der speicherprogrammierbaren Steuerung PLC werden durch die Kontrolleinrichtung KE unterdrückt. In Gegenrichtung lässt die Kontrolleinrichtung KE nur Datenpakete mit Meldungen (Antwortnachrichten) gemäß des OPC-UA-Protokolls passieren, welche die entsprechenden freigegebenen Inhalte transportieren. Die derart gefilterten Daten werden in der Anwendung AW1 aufbereitet und können über die Datenwolke, also beispielsweise das Internet als Kommunikationsmedium zwischen den Servern der Datenwolke CL und dem Edge-Gerät ED, abgerufen werden. Dazu ist der Kommunikationsanschluss KA2 auf herkömmliche Art und Weise durch die Anwendung AW1 zugreifbar. Dies bedeutet nicht zwangsläufig, dass dieser Zugriff komplett unkontrolliert ist; beispielweise kann eine herkömmliche Firewall dazwischengeschaltet sein. Es ist in diesem Beispiel jedoch nicht gewollt und nicht notwendig, eine Inhaltsfilterung (Content-Filter) hinsichtlich Datenverkehrs zwischen Komponenten in der Datenwolke CL und der Anwendung AW1 vorzunehmen.

Durch das vorstehend beschriebene Verfahren ist im konkreten Ausführungsbeispiel gewährleistet, dass Cyberangriffe aus dem Internet heraus oder aus der Datenwolke CL heraus auf die industrielle Automatisierungsanordnung und speziell das hier gezeigte "Device" (speicherprogrammierbaren Steuerung PLC) wirksam unterbunden werden, jedoch die von der speicherprogrammierbaren Steuerung PLC benötigten Daten durch diese bereitgestellt werden.

Anstelle des beschriebenen Verfahrens der Administrierung über eine Benutzerschnittstelle/User-Interface kann die Anwendung AW1 auch mit einem Zertifikat versehen sein, welches besagt, dass ein Abruf von Daten aus einer angeschlossenen speicherprogrammierbaren Steuerung PLC oder anderen Komponenten unter Maßgabe der Filterung nach Art einer Datendiode gestattet ist, und dass ein unbegrenzter Zugriff aus einem öffentlichen Bereich heraus (Internet, Datenwolke, Cloud) ebenso gleichzeitig gestattet ist. Anhand des Inhalts des Zertifikats kann dann die Datenflusskontrolleinrichtung DKE die Datenströme in dem Edge-Gerät ED entsprechend verschalten. Gleichzeitig kann auch die Kontrolleinrichtung KE entsprechend eingestellt werden, um den Anforderungen, die in dem Zertifikat definiert sind, zu genügen.

## Patentansprüche

1. Verfahren zur Kontrolle des Datenaustauschs eines industriellen Edge-Gerätes (ED) mit einer industriellen Automatisierungsanordnung (PLC) und mit einer Datenwolke (CL),
wobei das Edge-Gerät (ED) einen ersten Kommunikationsanschluss (KA1) zu der industriellen Automatisierungsanordnung (PLC) und einen zweiten Kommunikationsanschluss (KA2) zu einem Netzwerk der Datenwolke (CL) aufweist,
wobei das Edge-Gerät (ED) mit einer Anzahl die Daten austauschenden Anwendungen (AW1, AW2) versehen ist, und wobei das Edge-Gerät (ED) mit zumindest einer Kontrolleinrichtung (KE) zur Kontrolle der auszutauschenden Daten nach Art einer Firewall oder nach Art eines Content-Filters ausgerüstet ist,
**dadurch gekennzeichnet,**
**dass** für jede der Anwendungen (AW1, AW2) eingestellt wird, ob der Datenaustausch der jeweiligen Anwendung entweder über den ersten Kommunikationsanschluss (KA1) mittels der Kontrolleinrichtung (KE) kontrolliert wird und der Datenaustausch über den zweiten Kommunikationsanschluss (KA2) direkt erfolgt, oder umgekehrt der Datenaustausch über den ersten Kommunikationsanschluss (KA1) direkt erfolgt und die Kommunikation über den zweiten Kommunikationsanschluss (KA2) mittels der Kontrolleinrichtung (KE) erfolgt, und
**dass** mittels einer Datenflusskontrolleinrichtung (DKE) des Edge-Gerätes (ED) sichergestellt wird, dass eine Anwendung nicht gleichzeitig über beide Kommunikationsanschlüsse direkt Daten austauscht.

2. Verfahren nach Patentanspruch 1,
**dadurch gekennzeichnet,**
**dass** durch eine Benutzerschnittstelle administriert wird, über welchen der Kommunikationsanschlüsse eine Anwendung direkt kommuniziert und über welchen der Kommunikationsanschlüsse dieselbe Anwendung die Daten über die Kontrolleinrichtung (KE) austauscht.

3. Verfahren nach einem der vorhergehenden Patentansprüche,
**dadurch gekennzeichnet,**
**dass** durch die Datenflusskontrolleinrichtung (DKE) anhand eines Regelwerks entschieden wird, welcher der Kommunikationsanschlüsse direkt mit einer Anwendung verknüpft wird, und welcher der Kommunikationsanschlüsse über die Kontrolleinrichtung (KE) mit der Anwendung verknüpft wird.

4. Verfahren nach Patentanspruch 3,
**dadurch gekennzeichnet,**
**dass** die Entscheidung anhand von zumindest einem Zertifikat, welches der jeweiligen Anwendung zugeordnet ist, getroffen wird.

5. Verfahren nach Patentanspruch 4,
**dadurch gekennzeichnet,**
**dass** bei fehlendem oder fehlerhaftem Zertifikat die Anwendung ausschließlich über die Kontrolleinrichtung (KE) Daten austauschen kann und/oder nur mit einem der Kommunikationsanschlüsse verknüpft wird.

6. Verfahren nach einem der Patentansprüche 3 bis 5,
**dadurch gekennzeichnet,**
**dass** die Entscheidung anhand des Typs der Anwendung oder des Herstellers der Anwendung getroffen wird.

7. Verfahren nach einem der vorhergehenden Patentansprüche,
**dadurch gekennzeichnet,**
**dass** die Kontrolleinrichtung (KE) als eine Anwendung auf dem Edge-Gerät (ED) installiert wird.

8. Verfahren nach einem der vorhergehenden Patentansprüche,
**dadurch gekennzeichnet,**
**dass** die Anwendungen (AW1, AW2) als jeweils ein Anwendungs-Container in jeweils einer virtuellen Ausführungsumgebung auf dem Edge-Gerät (ED) installiert werden, wobei in jedem Container jeweils genau eine Anwendung installiert wird und jeder Container in einer separaten virtuellen Ausführungsumgebung zum Ablauf gebracht wird.

9. Verfahren nach Patentanspruch 8,
**dadurch gekennzeichnet,**
**dass** der Datenaustausch dadurch kontrolliert wird, dass je Container einer der Kommunikationsanschlüsse direkt zu diesem Container geroutet wird, und der jeweils andere Kommunikationsanschluss über die Kontrolleinrichtung (KE) zu diesem Container geroutet wird.

10. Verfahren nach einem der vorhergehenden Patentansprüche,
**dadurch gekennzeichnet,**
**dass** die Datenflusskontrolleinrichtung (DKE) durch eine Routine einer Firmware des Edge-Gerätes (ED) bereitgestellt wird,
wobei die Routine zur Steuerung oder Kontrolle der Kommunikationsanschlüsse des Edge-Gerätes (ED) eingerichtet ist.

11. Industrielles Edge-Gerät (ED) mit einer Einrichtung zur Kontrolle des Datenaustauschs des Edge-Gerätes (ED) mit einer industriellen Automatisierungsanordnung (PLC) und mit einer Datenwolke (CL),
wobei das Edge-Gerät (ED) einen ersten Kommunikationsanschluss (KA1) zu der industriellen Automatisierungsanordnung (PLC) und einen zweiten Kommunikationsanschluss (KA2) zu einem Netzwerk der Datenwolke (CL) aufweist,
wobei das Edge-Gerät (ED) mit einer Anzahl die Daten konsumierenden und/oder bereitstellenden und somit die Daten austauschenden Anwendungen (AW1, AW2) versehen ist, und
wobei das Edge-Gerät (ED) mit zumindest einer Kontrolleinrichtung zur Kontrolle der auszutauschenden Daten nach Art einer Firewall oder nach Art eines Content-Filters ausgerüstet ist,
**dadurch gekennzeichnet,**
**dass** das Edge-Gerät (ED) mit einer Datenflusskontrolleinrichtung ausgerüstet ist, wobei die Datenflusskontrolleinrichtung (DKE) derart ausgestaltet ist, dass eine Anwendung mit einem der Kommunikationsanschlüsse (KA1, KA2) einen direkten Datenaustausch durchführt und mit dem jeweils anderen der Kommunikationsanschlüsse (KA1, KA2) den Datenaustausch über die Kontrolleinrichtung (KE) durchführt, und
**dass** die Datenflusskontrolleinrichtung (DKE) derart ausgestaltet ist, dass eine Anwendung (AW1, AW2) nicht über beide Kommunikationsanschlüsse (KA1, KA2) zur gleichen Zeit direkt Daten austauscht.

## Claims

1. Method to control data exchange of an industrial edge device (ED) with an industrial automation arrangement (PLC) and with a data cloud (CL),
wherein the edge device (ED) has a first communication connection (KA1) to the industrial automation arrangement (PLC) and a second communication connection (KA2) to a network of the data cloud (CL),
wherein the edge device (ED) is provided with a number of applications (AW1, AW2) exchanging the data, and
wherein the edge device (ED) is equipped with at least one control device (KE) to control the data to be exchanged in the form of a firewall or in the form of a content filter, **characterized in that**,
for each of the applications (AW1, AW2), it is defined whether the data exchange of the respective application is either controlled by means of the control device (KE) via the first communication connection (KA1) and the data exchange is implemented directly via the second communication connection (KA2) or, conversely, the data exchange is implemented directly via the first communication connection (KA1) and the communication is implemented by means of the control device (KE) via the second communication connection (KA2), and
it is ensured by means of a data flow control device (DKE) of the edge device (ED) that an application does not simultaneously exchange data directly via both communication connections.

2. Method according to Patent Claim 1,
**characterized in that**
the communication connection via which an application communicates directly and the communication connection via which the same application exchanges the data via the control device (KE) are administered by means of a user interface.

3. Method according to one of the preceding patent claims, **characterized in that**
a decision is made by the data flow control device (DKE) on the basis of a set of rules to define which of the communication connections is linked directly to an application, and which of the communication connections is linked to the application via the control device (KE).

4. Method according to Patent Claim 3,
**characterized in that**
the decision is made on the basis of at least one certificate which is assigned to the respective application.

5. Method according to Patent Claim 4,
**characterized in that**,
in the event of a missing or incorrect certificate, the application can exchange data only via the control device (KE) and/or is linked to only one of the communication connections.

6. Method according to one of Patent Claims 3 to 5, **characterized in that**
the decision is made on the basis of the application type or the manufacturer of the application.

7. Method according to one of the preceding patent claims, **characterized in that**
the control device (KE) is installed as an application on the edge device (ED).

8. Method according to one of the preceding patent claims, **characterized in that**
the applications (AW1, AW2) are installed in each case as an application container in each case in a virtual execution environment on the edge device (ED), wherein precisely one application is installed in each case in each container and each container is run in a separate virtual execution environment.

9. Method according to Patent Claim 8,
**characterized in that**
the data exchange is controlled by routing one of the communication connections for each container directly to this container, and by routing the respective other communication connection via the control device (KE) to this container.

10. Method according to one of the preceding patent claims, **characterized in that**
the data flow control device (DKE) is provided by a routine of firmware of the edge device (ED),
wherein the routine is configured to control or monitor the communication connections of the edge device (ED).

11. Industrial edge device (ED) with a device to control data exchange of the edge device (ED) with an industrial automation arrangement (PLC) and with a data cloud (CL),
wherein the edge device (ED) has a first communication connection (KA1) to the industrial automation arrangement (PLC) and a second communication connection (KA2) to a network of the data cloud (CL),
wherein the edge device (ED) is provided with a number of applications (AW1, AW2) consuming and/or providing the data and therefore exchanging the data, and
wherein the edge device (ED) is equipped with at least one control device to control the data to be exchanged in the form of a firewall or in the form of a content filter, **characterized in that**
the edge device (ED) is equipped with a data flow control device, wherein the data flow control device (DKE) is designed in such a way that an application performs a direct data exchange with one of the communication connections (KA1, KA2) and performs the data exchange with the respective other of the communication connections (KA1, KA2) via the control device (KE), and
the data flow control device (DKE) is designed in such a way that an application (AW1, AW2) does not exchange data directly via both communication connections (KA1, KA2) at the same time.

## Revendications

1. Procédé de commande de l'échange de données d'un terminal (ED) industriel avec un agencement (PLC) d'automatisation industriel et avec un nuage (CL) de données,
dans lequel le terminal (ED) a une première connexion (KA1) de communication avec l'agencement (PLC) d'automatisation industriel et une deuxième connexion (KA2) de communication avec un réseau du nuage (CL) de données,
dans lequel le terminal (ED) est pourvu d'un certain nombre d'applications (AW1, AW2) échangeant les données et
dans lequel le terminal (ED) est équipé d'au moins un dispositif (KE) de commande, pour la commande des données à échanger à la manière d'un firewall ou à la manière d'un filtre de contenu, **caractérisé**
**en ce que**, pour chacune des applications (AW1, AW2), on établit si l'échange de données de l'application respective est commandée soit par la première connexion (KA1) de communication au moyen du dispositif (KE) de commande et si l'échange de données s'effectue directement par la deuxième connexion (KA2) de communication, soit inversement l'échange de données s'effectue directement par la première connexion (KA1) de communication et la communication s'effectue par la deuxième connexion (KA2) de communication au moyen du dispositif (KE) de commande et
**en ce qu'**au moyen d'un dispositif (DKE) de commande du flux de données du terminal (ED) on s'assure qu'une application n'échange pas des données directement en même temps par les deux connexions de communication.

2. Procédé suivant la revendication 1,
**caractérisé**
**en ce que**, par une interface d'utilisateur on administre, par celles des connexions de communication par lesquelles une application communique directement et celles des connexions de communication par lesquelles cette même application échange des données par le dispositif (KE) de commande.

3. Procédé suivant l'une des revendications précédentes, **caractérisé**
**en ce que**, par le dispositif (DKE) de commande de flux de données, on décide à l'aide d'un outil de régulation celle des connexions de communication, qui est combinée directement à une application et celle des connexions de communication, qui est combinée à l'application par le dispositif (KE) de commande.

4. Procédé suivant la revendication 3,
**caractérisé**
**en ce qu'**on prend la décision à l'aide d'au moins un certificat, qui est affecté à l'application respective.

5. Procédé suivant la revendication 4,
**caractérisé**
**en ce qu'**en l'absence d'un certificat ou si le certificat est défectueux, l'application peut échanger des données exclusivement par le dispositif (KE) de commande et/ ou n'est combinée qu'à l'une des connexions de communication.

6. Procédé suivant l'une des revendications 3 à 5,
**caractérisé**
**en ce que** l'on prend la décision à l'aide du type de l'application ou à l'aide du fabriquant de l'application.

7. Procédé suivant l'une des revendications précédentes, **caractérisé**
**en ce que** l'on installe le dispositif (KE) de commande sous la forme d'une application sur le terminal (ED).

8. Procédé suivant l'une des revendications précédentes, **caractérisé**
**en ce qu'**on installe les applications (AW1, AW2) comme respectivement conteneurs d'application dans respectivement un environnement de réalisation virtuel sur le terminal (ED), dans lequel, dans chaque conteneur, on installe respectivement exactement une application et on met chaque conteneur pour le déroulement dans un environnement de réalisation virtuel distinct.

9. Procédé suivant la revendication 8,
**caractérisé**
**en ce que** l'on commande l'échange de données par le fait que l'on achemine pour chaque conteneur l'une des connexions de communication directement à ce conteneur et on achemine respectivement l'autre connexion de communication à ce conteneur par le dispositif (KE) de commande.

10. Procédé suivant l'une des revendications précédentes, **caractérisé**
**en ce que** le dispositif (DKE) de commande de flux de données est mis à disposition par une routine d'une firmware du terminal (ED),
dans lequel la routine est conçue pour la commande ou le réglage des connexions de communication du terminal (ED).

11. Terminal (ED) industriel comprenant un dispositif de commande de l'échange de données du terminal (ED) avec un agencement (PLC) d'automatisation industriel et avec un nuage (CL) de données,
dans lequel le terminal (ED) a une première connexion (KA1) de communication avec l'agencement (PLC) d'automatisation industriel et une deuxième connexion (KA2) de communication avec un réseau d'une nuage (CL) de données,
dans lequel le terminal (ED) est pourvu d'un certain nombre d'applications (AW1, AW2) échangeant les données et
dans lequel le terminal (ED) est équipé d'au moins un dispositif (KE) de commande pour la commande des données à échanger à la manière d'un firewall ou à la manière d'un filtre de contenu, **caractérisé**
**en ce que** le terminal (ED) est équipé d'un dispositif de commande du flux de données, dans lequel le dispositif (DKE) de commande du flux de données est conformé de manière à ce qu'une application effectue un échange de données direct avec l'une des connexions (KA1, KA2) de communication et effectue avec respectivement l'autre des connexions (KA1, KA2) de communication l'échange de données par le dispositif (KE) de commande et
**en ce que** le dispositif (DKE) de commande du flux de données est conformé de manière à ce qu'une application (AW1, AW2) n'échange pas des données directement en même temps par les deux connexions (KA1, KA2) de communication.
